# FASCICULE DE BREVET EUROPEEN

(11) **EP 0 616 460 B1**
(45) Date de publication et mention de la délivrance du brevet: **26.09.2001**
(21) Numéro de dépôt: 94400545.3
(22) Date de dépôt: 14.03.1994
(51) Int. Cl.: H04M 17/02, H04M 19/08

(54) **Appareil téléphonique mis à la disposition du public**
Öffentlicher Telefonapparat
Public telephone apparatus

(30) Priorité: 16.03.1993 FR 9303007
(43) Date de publication de la demande: 21.09.1994
(73) Titulaire: FRANCE TELECOM, 75015 Paris (FR)
(72) Inventeur: Tallec, Ronan, F-92130 Issy-les-Moulineaux (FR)
(74) Mandataire: Dubois-Chabert, Guy

(56) Documents cités:
- EP-A- 0 160 411
- EP-A- 0 193 470
- FR-A- 2 607 343
- US-A- 5 105 460
- PATENT ABSTRACTS OF JAPAN vol. 013, no. 333 (E-794) 26 Juillet 1989 & JP-A-01 097 047 (ANRITSU CORP.) 14 Avril 1989
- PATENT ABSTRACTS OF JAPAN vol. 010, no. 061 (E-387)11 Mars 1986 & JP-A-60 212 059 (FUJITSU KK) 24 Octobre 1985

## Description

### Domaine technique

La présente invention a pour objet un appareil téléphonique à prépaiement ou postpaiement mis à la disposition du public.

### Etat de la technique antérieure

Les terminaux portables de télécommunication, tels que les micro-ordinateurs avec carte de communication, sont de plus en plus répandus. Leurs propriétaires souhaitent pouvoir les utiliser en tous lieux et en particulier dans les "publiphones" (marque déposée), qui sont des appareils téléphoniques à pré-ou postpaiement mis à la disposition du public.

Pour permettre une telle utilisation, les publiphones doivent être équipés d'une prise de raccordement externe. Jusqu'à ce jour, peu de possibilités ont été offertes aux usagers en raison des risques de fraude que présentent une telle prise.

A ce jour, l'offre d'une prise pour raccorder des terminaux externes ne s'est développée de manière significative essentiellement pour des raisons de sécurité. On peut néanmoins citer les solutions suivantes:
- interface dédiée entre un publiphone et un terminal avec protection mécanique des différents accès à la ligne téléphonique;
- prise de connexion de terminaux externes sur les téléphones à cartes, dans lesquels où la sécurisation de la ligne téléphonique se fait par le réseau en acquittant en temps réel des unités de taxation émises par le commutateur de rattachement;
- prise de connexion de terminaux externes sur des publiphones installés en des lieux protégés, où la sécurisation de la prise est très limitée.

Dans le cas d'une interface dédiée entre un publiphone d'un type particulier et un terminal d'un type particulier, la sécurisation de la ligne téléphonique est faite "mécaniquement" par protection physique de tous les accès à la ligne téléphonique. Ce genre de produit est installé à la vue directe de l'exploitant du publiphone. De plus, ce genre d'interface ne fonctionne qu'avec un publiphone d'un type particulier et un terminal d'un type particulier. On peut citer comme exemple de réalisation le dispositif intitulé "Point-Phone" (marque déposée) et son interface pour "Minitel" (marque déposée) , ce qui permet d'obtenir un "Publividéotex". Il n'est pas possible par exemple de raccorder sur ce genre de produit un micro-ordinateur portable équipé d'un modem. Un autre exemple concerne le dispositif intitulé point-phone et un télécopieur, ce qui permet d'obtenir un "Publifax" (marque déposée). Dans ces deux cas, l'interface entre le point-phone et le minitel ou le télécopieur est spécifique à chaque ensemble.

Dans le cas d'une prise de connexion de terminaux externes sur les téléphones à cartes, la sécurisation de la ligne téléphonique se fait par acquittement en temps réel des unités de taxation émises par le commutateur de rattachement. Entre le téléphone à cartes et le commutateur de rattachement, un dispositif est inséré en coupure. A chaque impulsion de taxation émise par le commutateur, le dispositif interroge le téléphone à cartes pour lui demander si la taxe a bien été reçue et débitée dans la carte. En cas de réponse incorrecte, le dispositif coupe la communication. Le dialogue entre le téléphone à cartes et le dispositif se fait par une liaison supravocale en dehors de la bande téléphonique. La sécurisation de la prise pour terminal externe se fait alors par ce dialogue supravocal. Il est à noter que dans un tel cas la sécurité n'est pas apportée par le téléphone à cartes mais par le réseau auquel est relié ce type de publiphone.

Dans le cas où la prise de connexion de terminaux externes est montée directement sur le publiphone, la sécurité est limitée. De ce fait, l'implantation de ce genre de publiphone se fait dans des lieux protégés où les risques sont minimisés. A l'étranger, on peut citer comme exemple de mise à disposition de l'usager d'une prise pour terminal externe le publiphone développé par la société ATT installé principalement dans les aéroports aux Etats-Unis.

Pour développer de manière significative la possibilité de raccorder un terminal externe sur un publiphone, il est nécessaire que la prise de connexion ne constitue pas un risque de non paiement des communications. A ce jour, seules deux des possibilités décrites ci-dessus permettent le raccordement banalisé de terminaux externes sur une prise.

Dans le cas de la prise de connexion sur les téléphones à cartes, il est nécessaire de disposer, dans les locaux du commutateur de rattachement, un dispositif pour assurer le suivi en temps réel du paiement de la communication. Si ce dispositif offre toute la sécurité nécessaire, il n'en reste pas moins que le raccordement de ce téléphone à cartes ne doit pas se faire en n'importe quel endroit, en l'absence du dispositif supravocal, et que ce téléphone à cartes ne correspond pas à tous les besoins exprimés.

Dans le cas où la prise de connexion de terminaux externes est montée directement sur le publiphone, le risque potentiel de fraude est élevé. Il en résulte que ce type de publiphone ne peut être installé que lorsque la surveillance du publiphone est assurée en permanence par l'exploitant.

Pour résoudre ces différents problèmes, l'invention a pour but d'offrir aux usagers une prise pour terminaux externes sur les publiphones qui assure une bonne immunité aux tentatives de fraude sans nécessiter le dispositif supravocal évoqué précédemment. La sécurité doit être apportée part le publiphone lui-même et non par le réseau.

Un document de l'art antérieur, la demande de brevet français FR-A-2 607 343, décrit un dispositif de couplage d'un terminal télématique à un appareil téléphonique à prépaiement et/ou paiement différé. Ce dispositif connecte un équipement d'accès à un service, tel qu'un terminal vidéotex ou télécopieur, à une ligne téléphonique lorsqu'il reçoit une demande d'un usager transmise par l'équipement d'accès. La demande de connexion n'est prise en compte par ce dispositif que si celui-ci reçoit d'un appareil téléphonique à prépaiement et/ou à paiement différé des signaux d'autorisation indiquant que l'usager a accompli les opérations relatives au paiement des communications et qu'une prise de ligne peut avoir lieu.

### Exposé de l'invention

L'invention propose à cet effet un appareil téléphonique à prépaiement ou postpaiement mis à la disposition du public comprenant un circuit de gestion relié à une ligne téléphonique, caractérisé en ce qu'il comprend :
- une prise accessible à l'usager ;
- un circuit de gestion de cette prise ;
- un circuit de commutation permettant de basculer la ligne soit sur le circuit de gestion dudit appareil, soit sur le circuit de gestion de la prise ;
- un circuit d'information d'une connexion d'un terminal externe dans la prise ; le circuit de gestion de la prise étant relié d'une part au circuit de commutation par un premier module d'isolation galvanique, et d'autre part au circuit de gestion dudit appareil par un second module d'isolation galvanique.

Avantageusement le dispositif de l'invention comprend un circuit d'alimentation du terminal externe qui peut être soit interne au publiphone, et relié au circuit de gestion de la prise au travers d'un troisième module d'isolation galvanique, soit externe et disposé entre le terminal externe et la prise.

Le circuit d'information d'une connexion peut être un circuit détecteur de courant, ou un interrupteur externe manipulable par l'utilisateur.

Dans un exemple de réalisation particulièrement avantageux, les modules d'isolation galvanique comprennent chacun un transformateur. Une source d'alimentation alternative est reliée à un circuit régulateur de courant au travers d'un transformateur et d'un pont de diodes, ce régulateur ayant sa sortie insérée entre deux enroulements du transformateur réalisant le premier module d'isolation galvanique. Le circuit régulateur de courant comprend un transistor, deux résistances et une diode; une première capacité permettant de boucler le courant laternatif, une seconde capacité permettant de lisser le courant continu.

Avantageusement le détecteur de courant est réalisé par un optocoupleur, une capacité permettant le passage des courants alternatifs.

Dans une variante de réalisation, le dispositif de l'invention comprend un ensemble d'amplification composé d'un module de passage deux fils-quatre fils, deux amplificateurs pour deux fils respectivement dans un sens de transmission et dans l'autre, et un module de passage quatre fils-deux fils.

Dans une variante numérique de réalisation, le circuit de gestion du publiphone comprend un circuit de codage-décodage et un circuit interface ligne relié à la ligne téléphonique, un module deux fils-quatre fils étant intercalé entre le premier module d'isolation galvanique et le circuit de commutation qui permet de basculer le circuit de gestion du publiphone relié à la ligne soit sur la prise, soit sur le combiné.

Avantageusement, l'invention permet de réaliser un dispositif de raccordement entre un terminal externe, qui peut être par exemple un micro-ordinateur portable, un télécopieur portable, un minitel portable, un poste téléphonique portable, et un publiphone en assurant une bonne immunité aux tentatives de fraude sans utiliser un dispositif supravocal, qui nécessite une liaison de dialogue, dans une fréquence située en dehors de la bande téléphonique, entre le terminal externe et le publiphone. La sécurité, dans le dispositif de l'invention, est apportée par le publiphone lui-même et non par le réseau.

Pour éliminer toute possibilité d'utilisation frauduleuse de la prise, l'invention permet d'assurer les fonctions suivantes :
- immunité au masquage des impulsions de taxation par des perturbations qui pourraient être générées par un usager mal intentionné (dans le cas où la taxation s'effectue par impulsions émises par le commutateur) ;
- contrôle de la prise de ligne téléphonique par le publiphone et non par le terminal externe. Cette fonction est nécessaire dans tous les modes de calcul de taxation ;
- contrôle de la numérotation par le publiphone dans le cas où il existe des restrictions pour l'appel de certains numéros.

La solution présentée est tout particulièrement intéressante dans le cas où la taxation de la communication est calculée puis émise par le commutateur de rattachement. En France, les impulsions de taxation sont émises depuis le commutateur de rattachement vers le publiphone sous forme d'envoi de fréquences à 12 kHz pendant une centaine de millisecondes. Dans d'autres pays, la fréquence peut être à 16 kHz. Dans le cas où le calcul de la taxation est effectué en local par le publiphone, l'invention reste utilisable et permet également d'améliorer l'immunité aux fraudes.

### Brève description des figures

- La figure 1 illustre le dispositif de l'invention ;
- la figure 2 illustre une réalisation particulière du dispositif de l'invention ;
- les figures 3 à 5 illustrent trois variantes de réalisation du dispositif de l'invention.

### Exposé détaillé des modes de réalisation

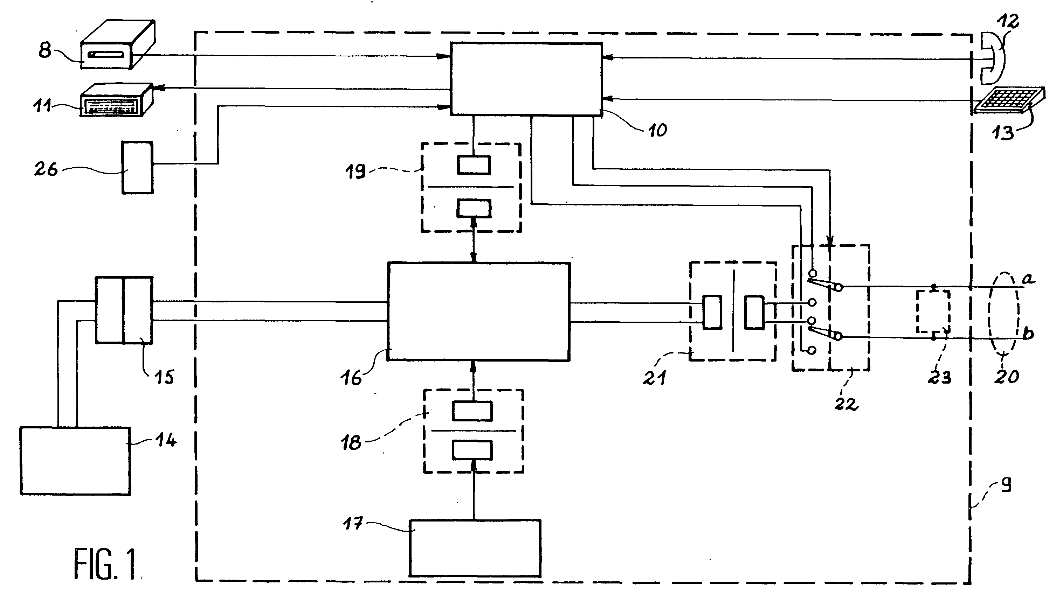

Comme représenté sur la figure 1, le dispositif de l'invention interface entre d'une part les circuits constituant un publiphone 9 qui sont notamment un circuit de gestion 10, auquel peuvent être connectés, par exemple, un lecteur de carte à mémoire 8, un afficheur 11, un combiné téléphonique 12 et un davier 13, et d'autre part un terminal externe 14, comprend :
- une prise 15 accessible à l'usager ;
- un circuit de gestion de cette prise 16 relié :
   . aux deux fils a et b d'une ligne téléphonique 20 au travers d'un premier module d'isolation galvanique 21 et d'un circuit de commutation 22 qui permet, lorsque le circuit de gestion 10 du publiphone détecte le branchement d'un terminal extérieur 14 dans cette prise 15, de basculer la ligne 20 qui était branchée à ce circuit de gestion du publiphone 10 sur la prise 15,
   . au circuit de gestion du publiphone 10 au travers d'un second module d'isolation galvanique 19,
   . à un circuit d'alimentation 17 du terminal externe au travers d'un troisième module d'isolation galvanique 18.

Un éventuel récepteur de taxe 23 peut être intégré au publiphone entre les deux fils a et b de la ligne téléphonique 20.

Le dispositif de l'invention permet de réaliser la liaison entre le terminal externe et les circuits constituant le publiphone, avec installation d'une prise de connexion pour ledit terminal externe.

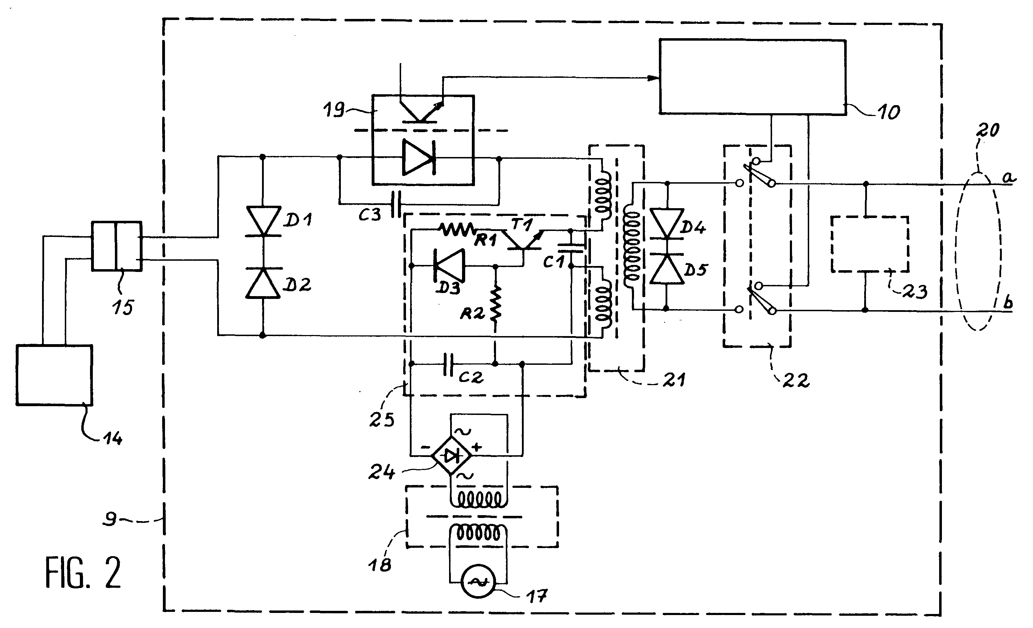

La figure 2 illustre une réalisation particulière du dispositif.de l'invention Sur cette figure les circuits analogues à ceux de la figure 1 ont conservé la même référence.

Le circuit d'alimentation 17 est une source d'alimentation alternative reliée au travers du troisième module d'isolation galvanique 18, réalisé ici par un transformateur, à un pont de diodes de redressement 24 dont deux branches sont reliées à un circuit régulateur de courant 25 formé par un transistor T1, deux résistances R1 et R2 et une diode D3: une première capacité C1 permettant le passage des signaux alternatifs et une seconde capacité C2 permettant de lisser le courant continu.

Le premier module d'isolation galvanique 21 comprend un transformateur à double isolement pour assurer l'équilibrage de la ligne en injectant le courant au milieu.

Le second module d'isolation galvanique 19 est réalisé par un optocoupleur, la troisième capacité C3 permettant d'éviter un affaiblissement du courant alternatif.

Deux diodes D1 et D2, disposées tête-bêche, permettent d'écrêter les signaux de très fort niveau que l'on voudrait introduire sur la prise 15. Les diodes D4 et D5 permettent de protéger la ligne 20.

Le branchement d'un terminal externe 14 sur la prise 15 est détecté par surveillance de l'apparition d'un courant continu.

Dans cet exemple de réalisation représenté sur la figure 2, le dispositif de l'invention s'intègre donc dans un publiphone disposant d'une alimentation externe. Les trois éléments constitutifs du principe de base se retrouvent dans la réalisation :
- l'isolation galvanique ;
- l'alimentation locale ;
- le détecteur de courant.

L'isolation galvanique est réalisée par un transformateur dont la bande passante est équivalente à celle de la bande téléphonique, c'est-à-dire 300 Hz à 3 400 Hz.

L'alimentation locale est réalisée à partir d'une source de tension continue. Le transistor T1 monté en ballast limite le courant continu en cas de court-circuit des deux plots de la prise 15 pour les terminaux externes. Cette alimentation est générée à partir d'une source de tension alternative 17 au travers du transformateur 18 exclusivement réservé à cet effet afin de préserver l'isolation galvanique. L'alimentation est insérée entre deux enroulements du transformateur 21 pour assurer une bonne symétrie. La capacité C1 permet le passage des signaux alternatifs. Dans le cas de cette réalisation, il est considéré que le publiphone dispose d'une alimentation externe en plus de sa télé-alimentation par la ligne. Ce cas correspond à un grand nombre de possibilités d'implantation et est cohérent avec le type des publiphones qui disposeront de cette prise 15.

Le détecteur de courant 19 est réalisé avec un optocoupleur qui informe le publiphone du bouclage de la prise 15 par un terminal 14. La capacité C3 permet le passage des signaux alternatifs. L'isolation galvanique est préservée.

Le schéma proposé empêche toute action de rupture de boucle directe sur la ligne téléphonique. Il permet par contre la transmission de tous les signaux contenus dans la bande 300 - 3 400 Hz lorsque la ligne téléphonique est orientée vers la prise de connexion de terminaux externes.

Pour limiter le niveau des signaux alternatifs à émettre sur la ligne téléphonique, les deux diodes tête-bêche D4 et D5 écrêtent tout signal alternatif supérieur à un certain niveau.

De même pour limiter les perturbations sur la ligne, le transformateur a un rôle de filtrage des fréquences en dehors de la bande téléphonique. Si nécessaire un filtre passif peut être introduit en entrée de prise.

Pour sécuriser cette liaison et pour assurer les fonctions décrites précédemment, l'invention présente donc les caractéristiques suivantes :
- une isolation galvanique assure la séparation entre le terminal externe et le publiphone ;
- une alimentation locale simule pour le terminal externe un raccordement sur un commutateur. Cette alimentation est nécessaire pour permettre le fonctionnement de tout terminal externe ;
- un détecteur de courant permet de surveiller le raccordement sur la prise 15 d'un terminal 14 en mode communication. Cette fonction n'est pas indispensable mais permet d'offrir à l'usager un mode de fonctionnement plus simple.

Le récepteur de taxes du publiphone 23, quand il existe, est toujours en entrée du publiphone 9 pour surveiller, dans toutes les phases et à tout moment, l'arrivée d'unités de taxation.

L'isolation galvanique a pour rôle d'assurer une séparation électrique entre les deux contacts de la prise de raccordement 15 et toute l'électronique du publiphone. Cette isolation doit autoriser une bande passante équivalente à celle de la bande téléphonique, c'est-à-dire de 300 Hz à 3 400 Hz. Cette isolation galvanique remplit en fait deux rôles :
- un rôle d'immunité vis-à-vis de certaines tentatives de fraude ;
- un rôle d'interdiction de prise de ligne téléphonique 20 par le terminal 14. Celle-ci ne peut se faire que par le publiphone.

L'alimentation locale pour le terminal externe 14 est réalisée à partir d'une source d'énergie qui doit impérativement être isolée galvaniquement à la fois de la ligne téléphonique 20 et de l'alimentation générale du publiphone. Cette alimentation est comprise dans des valeurs de tension et de courant qui simulent un raccordement sur une ligne téléphonique. Un dispositif de limitation de courant est présent pour éliminer tous risques de détérioration du terminal externe ou de danger pour l'usager.

Un détecteur de courant permet la surveillance du raccordement d'un terminal externe sur la prise. Ce détecteur doit également être isolé galvaniquement de l'électronique du publiphone. La fonction de ce détecteur est de reconnaître la présence d'un courant continu dans la prise, c'est-à-dire être informé que le terminal externe est en boucle. Il peut également servir à détecter les tentatives de numérotation décimales que pourraient émettre le terminal raccordé.

La prise pour le terminal externe dispose de deux plots de connexion. cette prise est réalisée en matière suffisamment solide pour résister aux diverses agressions.

Pour assurer le niveau de sécurité nécessaire à l'extension du parc de publiphone équipé d'une prise de connexion pour terminaux externes, le dispositif de l'invention doit être intégré dans le publiphone. Il doit faire la liaison entre le terminal externe et les constituants du publiphone. Le fonctionnement de ce dispositif est décrit ci-après dans les différentes phases d'une communication téléphonique à partir d'un publiphone.

Lors de la prise de ligne, qui est la conséquence du décroché du combiné 12 par l'usager, le fonctionnement du publiphone en mode téléphone ne change pas. Lorsqu'une prise de connexion pour terminal externe 14 est présente, l'aiguillage vers ce terminal externe peut être réalisé de deux façons :
- par appui sur une touche spécifique 26 sur le publiphone ;
- par connexion automatique, lorsque le publiphone sait détecter la présence d'un terminal externe 14.

Ces deux solutions peuvent être soit présentes toutes les deux sur le même publiphone, soit exclusives, suivant les fonctions que l'on veut offrir à l'usager.

A la connexion d'un terminal externe, le publiphone est informé de la demande de connexion soit par un détecteur de présence sur la prise 15, soit par l'appui sur la touche connexion 26.

Cette demande n'est prise en compte que si un moyen de paiement valide est présent dans le publiphone. Si le moyen de paiement est valide, la prise de ligne réelle est faite par le publiphone.

La ligne téléphonique 20 est immédiatement basculée vers le terminal externe 14 au travers d'une isolation galvanique 21 si la numérotation doit être faite par le terminal externe. Sinon le basculement n'a lieu qu'après numérotation.

La phase suivante est la phase de numérotation. La numérotation peut être émise soit par le publiphone, soit par le terminal externe. Ces deux possibilités peuvent être offertes simultanément ou non sur le publiphone. Tout particulièrement, la numérotation par le terminal externe 14 peut être interdite pour des raisons de sécurité.

La numérotation peut donc être effectuée par le publiphone. Ce cas est le plus simple et est le plus adapté lorsque des restrictions d'emploi vis-à-vis de certains numéros existent. Il assure a priori la meilleure sécurité. La composition des seuls numéros autorisés est alors assurée puisque c'est le publiphone qui gère le tout. Aucune fréquence ne peut être émise sur la ligne téléphonique par le terminal 14 avant la fin de la numérotation car la liaison vers la prise est coupée. A la fin de la numérotation, la liaison vers la prise 15 est établie et le terminal externe peut se placer en phase de conversation.

La numérotation peut également être effectuée par le terminal externe 14. Ce cas est plus complexe à gérer :
- s'il n'y a pas de restrictions d'emploi vis-à-vis de certains numéros, la numérotation à fréquences vocales peut être transmise directement au réseau téléphonique via l'interface. Si la numérotation décimale doit aussi pouvoir être utilisée, un détecteur de courant reconnaît la numérotation décimale puis le publiphone renumérote sur la ligne téléphonique pour transmettre le numéro car il y a isolation galvanique entre le terminal externe et cette ligne. Cette renumérotation peut être soit décimale, soit en fréquence vocale ;
- si des restrictions d'emploi vis-à-vis de certains numéros existent, la surveillance de la numérotation est en plus indispensable. En numérotation décimale, celle-ci peut se faire à l'aide du détecteur de courant. En numérotation à fréquence vocale, la surveillance doit se faire à l'aide d'un circuit de détection de fréquences vocales intégré à cette interface tout en gardant bien sûr un isolation galvanique. En cas de détection d'un numéro interdit, la communication est interrompue. Si le numéro est autorisé, la numérotation est émise comme précédemment.

Dans la phase de conversation, l'usager peut utiliser son terminal externe 14 et transmettre toutes fréquences dans la bande téléphonique. La ligne téléphonique 20 est orientée vers le terminal externe 14 au travers de l'isolation galvanique 21. L'alimentation locale simule une ligne téléphonique réelle pour le terminal externe. Le détecteur de courant s'assure de la présence du terminal externe.

L'immunité à la fraude est assurée par l'isolation galvanique qui empêche de venir perturber la ligne téléphonique.

La fin de la communication peut être provoquée :
- sur ordre du publiphone, en cas d'épuisement du crédit par exemple ;
- par rupture de la communication par le terminal externe dans les cas suivants :
   . lorsque l'usager débranche le terminal de la prise externe,
   . lorsque le terminal externe rompt la boucle continue sur la prise (équivalent à un raccroché de ligne). Le détecteur de courant en informe le publiphone qui libère à ce moment la ligne téléphonique réelle.

Dans certains cas, le publiphone offre une possibilité de "reprise de crédit" soit en effectuant un raccroché bref, soit par appui sur une touche spécifique. Cette facilité peut être conservée avec la prise de connexion-externe. Dans ce cas après avoir reconnu une demande de "reprise de crédit" par l'usager, le publiphone effectue une ouverture de ligne pour libérer les équipements du commutateur puis reboucle la ligne. Le cycle d'une communication normale peut alors reprendre.

On peut alors considérer plusieurs variantes de réalisation-du dispositif de l'invention.

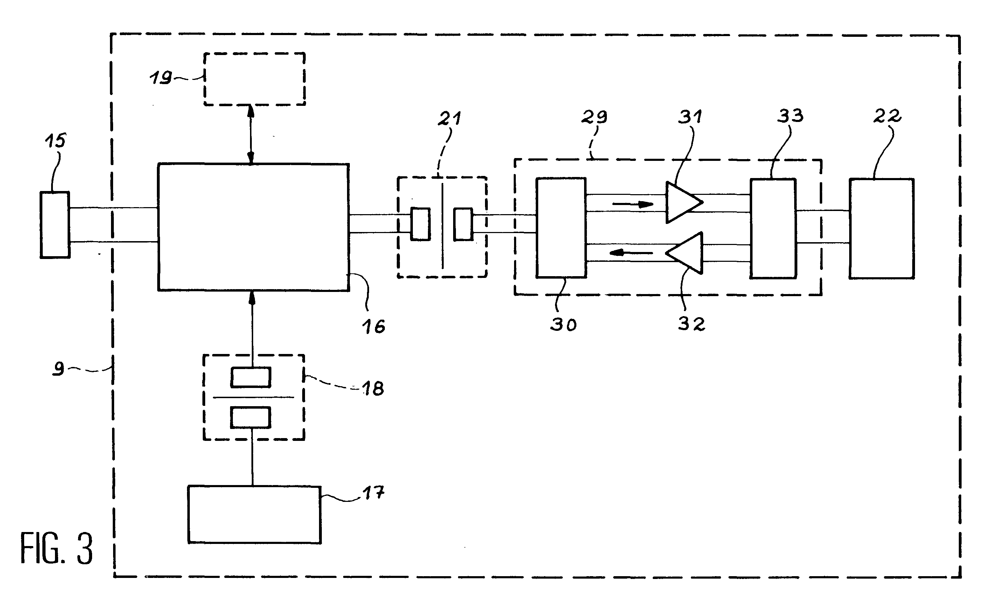

Dans le cas où l'atténuation est trop forte entre la prise 15 de connexion externe et la ligne téléphonique 20, une amplification des signaux téléphoniques est introduite. Cette amplification se fait du côté publiphone pour éliminer les problèmes d'isolation galvanique. Un montage de passage deux fils-quatre fils est effectué pour amplifier le signal dans chaque sens. Pour la liaison avec le réseau téléphonique, la connexion se fait sur le circuit de parole du publiphone. Ainsi dans une première variante de réalisation, représentée à la figure 3, un ensemble d'amplification est inséré entre le transformateur 21 et le circuit de commutation 22. Il comprend un module 30 de passage deux fils-quatre fils, deux amplificateurs 30 et 31 pour deux fils respectivement dans un sens de transmission et dans l'autre, et un module 33 de passage quatre fils-deux fils.

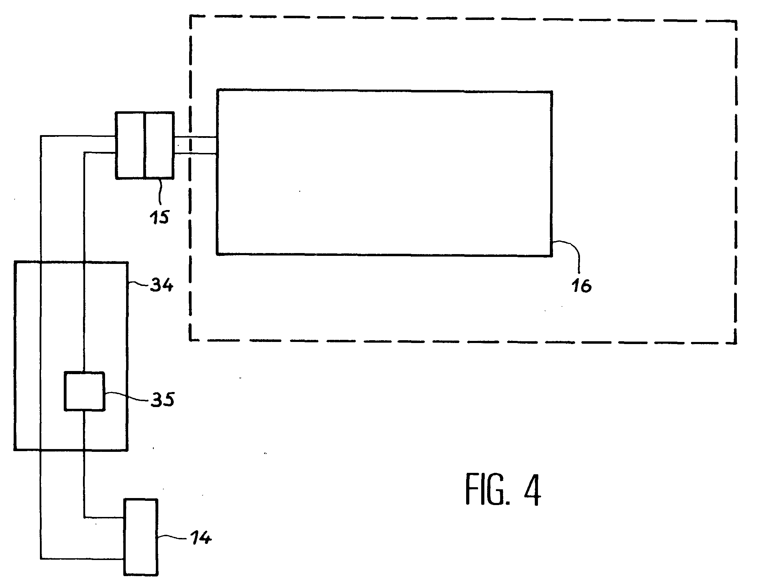

Dans le cas où il n'y a pas d'alimentation externe pour le publiphone, la fourniture d' alimentation locale pour le publiphone devient difficile pour des raisons de bilan énergétique du publiphone. Dans ces conditions, la solution consiste en ce que l'usager dispose d'un cordon spécifique entre la prise du publiphone et son terminal externe. Ce cordon spécifique génère une source de courant à partir de piles ou de batteries. Cette source de courant remplace l'alimentation locale décrite dans le schéma de base, le reste ne changeant pas. L'isolation galvanique est assurée car l'alimentation provient d'une source extérieure indépendante. Ainsi, dans une deuxième variante représentée sur la figure 4 l'usager doit interposer un boîtier spécifique 34 comportant une alimentation 35, entre son terminal 14 et la prise 15.

Les modes de fonctionnement décrits précédemment concernent les publiphones analogiques où la sécurisation de l'accès à la ligne téléphonique est essentielle.

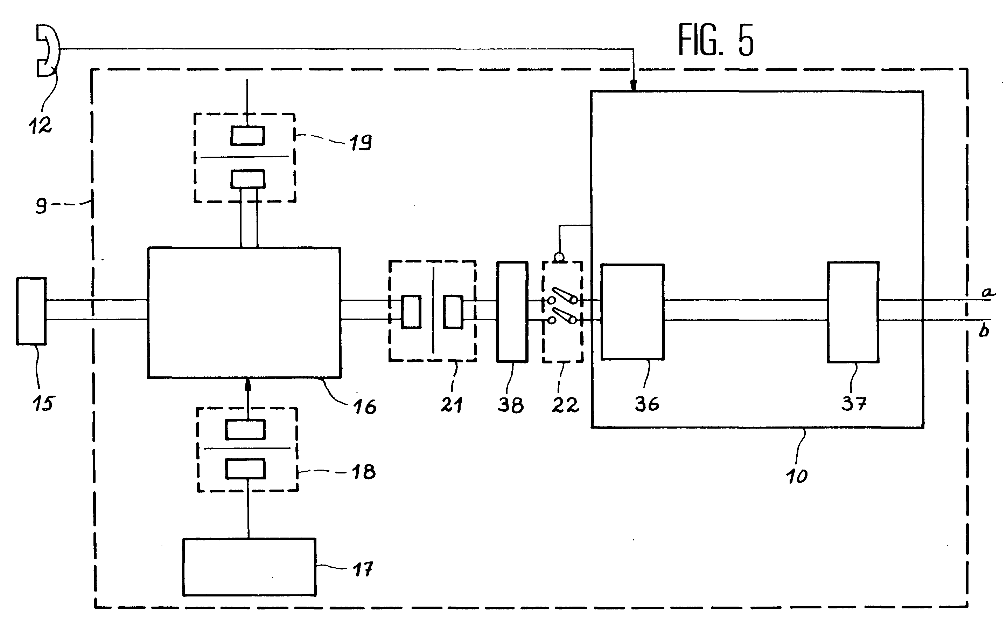

Dans le cas d'un publiphone numérique, une prise de connexion pour terminaux externes analogiques est réalisée de la même façon. Dans ce cas la partie du dispositif de l'invention côté prise ne change pas. La partie de ce dispositif côté publiphone par contre évolue. En sortie du transformateur 21, un circuit de numérisation du signal téléphonique permet l'émission en numérique sur la ligne 20 au travers de l'interface publiphone. Ce circuit transforme aussi les signaux reçus de la ligne via le publiphone en signal analogique transmis à la prise via le transformateur. Une troisième variante numérique est représentée sur la figure 5. Le circuit de gestion du publiphone 10 comprend alors un circuit de codage-décodage 36 et un circuit interface ligne 37. Un module deux fils-quatre fils 38 est intercalé entre le premier module d'isolation galvanique 21 et le circuit de commutation 22 qui permet de basculer le circuit de gestion du publiphone 10 relié à la ligne téléphonique soit sur la prise 15, soit sur le combiné 12. Les principes de fonctionnement du dispositif de l'invention côté prise restent identiques. La numérotation à partir du terminal externe peut être envisagée de la même façon que dans le cas du publiphone analogique avec renumérotation en numérique par le publiphone.

## Revendications

1. Appareil téléphonique à prépaiement ou postpaiement mis à la disposition du public comprenant un circuit de gestion (10) relié à une ligne téléphonique (20), **caractérisé en ce qu'**il comprend :
- une prise (15) accessible à l'usager ;
- un circuit (16) de gestion de cette prise (15) ;
- un circuit de commutation (22) permettant de basculer la ligne (20) soit sur le circuit de gestion dudit appareil (10), soit sur le circuit (16) de gestion de la prise (15) ;
- un circuit d'information d'une connexion d'un terminal externe dans la prise ; le circuit (16) de gestion de la prise (15) étant relié d'une part au circuit de commutation (22) par un premier module d'isolation galvanique (21), et d'autre part au circuit de gestion dudit appareil (10) par un second module d'isolation galvanique (19).

2. Appareil selon la revendication 1, **caractérisé en ce qu'**il comprend un circuit d'alimentation du terminal externe.

3. Appareil selon la revendication 2, **caractérisé en ce que** ce circuit d'alimentation (17) est interne et relié au circuit de gestion de la prise (16) au travers d'un troisième module d'isolation galvanique (18).

4. Appareil selon la revendication 2, **caractérisé en ce que** le circuit d'alimentation est un boîtier externe (34) qui peut être disposé entre le terminal externe (14) et la prise (15).

5. Appareil selon la revendication 1, **caractérisé en ce que** le circuit d'information d'une connexion est un circuit détecteur de courant.

6. Appareil selon la revendication 1, **caractérisé en ce que** le circuit d'information d'une connexion est un interrupteur externe (26) qui peut être manipulé par l'utilisateur.

7. Appareil selon l'une quelconque des revendications précédentes, **caractérisé en ce que** les modules d'isolation galvanique (18, 19, 21) comprennent chacun un transformateur.

8. Appareil selon la revendication 7, **caractérisé en ce qu'**il comprend une source d'alimentation alternative (17) reliée à un circuit régulateur de courant (25) au travers d'un transformateur (18) et d'un pont de diodes (24), ce régulateur ayant sa sortie insérée entre deux enroulements du transformateur réalisant le premier module d'isolation galvanique.

9. Appareil selon la revendication 8, **caractérisé en ce que** le circuit régulateur de courant comprend un transistor (T1), deux résistances (R1, R2) et une diode (D3), une première capacité (C1) permettant de boucler le courant alternatif, une seconde capacité (C2) permettant de lisser le courant continu.

10. Appareil selon la revendication 5, **caractérisé en ce que** le détecteur de courant est réalisé par un optocoupleur (19), une capacité (C3) permettant le passage des courants alternatifs.

11. Appareil selon la revendication 1, **caractérisé en ce qu'**il comprend un ensemble d'amplification (29) composé d'un module de passage deux fils-quatre fils (30), deux amplificateurs (31, 32) pour deux fils respectivement dans un sens de transmission et dans l'autre, et un module de passage quatre fils-deux fils (33).

12. Appareil selon la revendication 1,
**caractérisé en ce que** le circuit de gestion (10) comprend un circuit de codage-décodage (36) et un circuit interface ligne (37) relié à la ligne téléphonique (20), un module deux fils-quatre fils (38) étant intercalé entre le premier module d'isolation galvanique (21) et le circuit de commutation (22) qui permet de basculer le circuit de gestion (10) relié à la ligne soit sur la prise (15), soit sur le combiné (12).

## Patentansprüche

1. Öffentlicher Telefonapparat mit Vorbezahlung oder Nachbezahlung, der einen mit einer Telefonleitung (20) verbundenen Steuerschaltkreis (10) aufweist, **dadurch gekennzeichnet, daß** er umfaßt:
- einen dem Benutzer zugänglichen Anschluß (15),
- einen Schaltkreis (16) zur Steuerung bzw. Verwaltung dieses Anschlusses (15),
- einen Wechselschaltkreis (22), der ein Umschalten der Leitung (20) entweder auf den Steuerschaltkreis des Apparats (10) oder auf den Steuerschaltkreis (16) des Anschlusses (15) gestattet,
- einen Schaltkreis zur Information über eine Verbindung eines externen Endgeräts mit dem Anschluß, wobei der Steuerschaltkreis (16) des Anschlusses (15) einerseits über ein erstes Modul (21) zur galvanischen Trennung bzw. Isolierung mit dem Wechselschaltkreis (22) und andererseits über ein zweites Modul (19) zur galvanischen Trennung bzw. Isolierung mit dem Steuerschaltkreis des Apparats (10) verbunden ist.

2. Apparat gemäß Anspruch 1, **dadurch gekennzeichnet, daß** er einen Schaltkreis zur Versorgung des externen Endgeräts umfaßt.

3. Apparat gemäß Anspruch 2, **dadurch gekennzeichnet, daß** der Versorgungsschaltkreis (17) intern und mit dem Steuerschaltkreis des Anschlusses (16) über ein drittes Modul (18) zur galvanischen Trennung verbunden ist.

4. Apparat gemäß Anspruch 2, **dadurch gekennzeichnet, daß** der Versorgungsschaltkreis eine externe Schalteinheit (34) ist, die zwischen dem externen Endgerät (14) und dem Anschluß (15) angeordnet werden kann.

5. Apparat gemäß Anspruch 1, **dadurch gekennzeichnet, daß** der Schaltkreis zur Information über eine Verbindung eine Stromdetektorschaltung ist.

6. Apparat gemäß Anspruch 1, **dadurch gekennzeichnet, daß** der Schaltkreis zur Information über eine Verbindung ein externer Schalter (26) ist, der vom Benutzer bedient werden kann.

7. Apparat gemäß einem der vorangehenden Ansprüche, **dadurch gekennzeichnet, daß** die galvanischen Trenn- bzw. Isoliermodule (18,19,21) mit jeweils einen Transformator aufweisen.

8. Apparat gemäß Anspruch 7, **dadurch gekennzeichnet, daß** er eine über einen Transformator (18) und eine Diodenbrücke (24) mit einem Stromregelkreis (25) verbundene Wechselstromquelle (17) aufweist, wobei der Ausgang des Regelkreises zwischen zwei Wicklungen des das erste galvanische Trenn- bzw. Isoliermodul bildenden Transformators eingefügt ist.

9. Apparat gemäß Anspruch 8, **dadurch gekennzeichnet, daß** der Stromregelkreis einen Transistor (T1), zwei Widerstände (R1,R2) und eine Diode (D3) umfaßt, wobei ein erstes C-Glied (C1) ermöglicht, den Wechselstrom zu einer Schleife zu schalten und ein zweites C-Glied (C2) ermöglicht, den Gleichstrom zu glätten.

10. Apparat gemäß Anspruch 5, **dadurch gekennzeichnet, daß** der Stromdetektor durch einen Optokoppler (19) realisiert ist, wobei ein C-Glied (C3) das Passieren von Wechselströmen gestattet.

11. Apparat gemäß Anspruch 1, **dadurch gekennzeichnet, daß** er eine Verstärkungseinheit (29), bestehend aus einem Zweidraht-Vierdraht-Durchgangsmodul (30), zwei Verstärkern (31,32) für jeweils zwei Drähte in der einen und der anderen Übertragungsrichtung, sowie einem Vierdraht-Zweidraht-Durchgangsmodul (33), umfaßt.

12. Apparat gemäß Anspruch 1, **dadurch gekennzeichnet, daß** der Steuerschaltkreis (10) eine Codier-/Decodierschaltung (36) und eine mit der Telefonleitung (20) verbundene Leitungs-Schnittstellenschaltung (37) umfaßt, wobei zwischen das erste galvanische Trenn- bzw. Isoliermodul (21) und den Wechselschaltkreis (22) ein Zweidraht-Vierdraht-Modul (38) zwischengeschaltet ist, welches ein Schalten des mit der Leitung verbundenen Steuerschaltkreises (10) entweder auf den Anschluß (15) oder auf den Handapparat (12) gestattet.

## Claims

1. Prepayment or postpayment telephone apparatus made available to the public comprising a control circuit (10) connected to a telephone line (20), **characterized in that** it comprises:
- a connector (15) accessible to the user,
- a circuit (16) controlling said connector (15),
- a switching circuit (22) making it possible to switch the line (20) either to the control circuit of said apparatus (10) or to the control circuit (16) of the connector (15),
- an information circuit (12) of a connection of an external terminal in the connector (15),
- the connector control circuit being connected on the one hand to the switching circuit (22) by a first electrical insulation module (21) and on the other to the control circuit of said apparatus (10) by a second electrical insulation module (19).

2. Device according to claim 1, **characterized in that** it comprises a power supply circuit for the external terminal.

3. Device according to claim 2, **characterized in that** the power supply circuit (17) is within the public telephone and is connected to the control circuit of the connector (16) across a third electrical insulation module (18).

4. Device according to claim 2, **characterized in that** the power supply circuit is an external box (34), which can be placed between the external terminal (14) and the connector (15).

5. Device according to claim 1, **characterized in that** the information circuit of a connection is a current detector circuit.

6. Device according to claim 1, **characterized in that** the information circuit of a connection is an external switch (26), which can be manipulated by the user.

7. Device according to any one of the preceding claims, **characterized in that** the electrical insulation modules (18, 19, 21) in each case comprise a transformer.

8. Device according to claim 7, **characterized in that** it comprises an a.c. power supply (17) connected to a current regulating circuit (25) across a transformer (18) and a diode bridge (24), said regulator having its output inserted between two windings of the transformer constituting the first electrical insulation module.

9. Device according to claim 8, **characterized in that** the current regulating circuit comprises a transistor (T1), two resistors (R1,R2) and a diode (D3), a first capacitor (C1) making it possible to loop the alternating current and a second capacitor (C2) making it possible to smooth the direct current.

10. Device according to claim 5, **characterized in that** the current detector is constituted by an optical coupler (19), a capacitor (C3) permitting the passage of alternating currents.

11. Device according to claim 1, **characterized in that** it comprises an amplifying unit (29) formed by a two wire - four wire passage module (30), two amplifiers (31,32) for two wires respectively in one transmission direction and in the other, and a four wire - two wire passage module (33).

12. Device according to claim 1, **characterized in that** the public telephone control circuit comprises an encoding-decoding circuit (36) and a line interface circuit (37) connected to the telephone line (20), a two wire-four wire module (38) being inserted between the first electrical insulation module (21) and the switching circuit (22) making it possible to switch the public phone control circuit (10) connected to the line either to the connector (15), or to the hand set (12).
